# EUROPÄISCHE PATENTSCHRIFT

(11) **EP 1 382 185 B1**
(45) Veröffentlichungstag und Bekanntmachung des Hinweises auf die Patenterteilung: **18.07.2007**
(21) Anmeldenummer: 02740464.9
(22) Anmeldetag: 11.04.2002
(51) Int. Cl.: H04M 1/60

(54) **SCHALTUNGSANORDNUNG ZUR AUDIOWIEDERGABE UND ZUM FREISPRECHEN IN EINEM KRAFTFAHRZEUG**
CIRCUIT FOR AUDIO PLAYBACK AND FOR HANDS-FREE OPERATION IN A MOTOR VEHICLE
CIRCUIT ASSURANT UNE REPRODUCTION AUDIO ET PRESENTANT UNE FONCTION MAINS LIBRES MONTE DANS UN VEHICULE AUTOMOBILE

(30) Priorität: 26.04.2001 DE 10120525
(43) Veröffentlichungstag der Anmeldung: 21.01.2004
(73) Patentinhaber: Harman Becker Automotive Systems GmbH, 76307 Karlsbad (DE)
(72) Erfinder: PFAFFINGER, Gerhard, 93053 Regensburg (DE)
(74) Vertreter: Schmuckermaier, Bernhard
(86) Internationale Anmeldenummer: PCT/EP2002/004053
(87) Internationale Veröffentlichungsnummer: WO 2002/089452

(56) Entgegenhaltungen:
- EP-A- 1 047 249
- WO-A-99/03198
- DE-A- 19 619 815
- DE-A- 19 939 631
- DE-A- 19 946 344

## Beschreibung

Die Erfindung betrifft eine Schaltungsanordnung zur Audiowiedergabe und zum Freisprechen in einem Kraftfahrzeug.

In der heutigen Zeit zählen Audioanlagen mit CD-Player, Radioempfangsteil, Endstufen und Lautsprechern schon zur Standardausrüstung von Kraftfahrzeugen. Zudem finden in jüngster Zeit auch mehr und mehr Mobilfunkeinrichtungen (fest installierte als auch mobile mit stationärer Anschlussmöglichkeit) zunehmend Eingang ins Kraftfahrzeug. Lange Zeit wurden beide Systeme völlig getrennt voneinander im Fahrzeug installiert, so dass der notwendige materielle Aufwand und der Installationsaufwand sehr hoch sind.

Eine Anordnung gemäß der DE 199 39 631 A1 betrifft eine Schaltungsanordnung zur Audiowiedergabe und zum Freisprechen in einem Kraftfahrzeug. Diese umfasst mindestens einen ersten elektroakustischen Wandler zum Wandeln von elektrischen Signalen in akustische Signale, einen zweiten elektroakustischen Wandler zum Wandeln von akustischen Signalen in elektrische Signale, eine zwischen den beiden elektroakustischen Wandlern geschalteten, programmgesteuerten Signalbearbeitungseinrichtung zum Bearbeiten von ihr durch den zweiten elektroakustischen Wandler oder anderweitig zugeführten Audiosignalen und einen Programmspeicher zum Abspeichern eines Programms zur Audiowiedergabe und eines Programms zum Freisprechen für die Signalbearbeitungseinrichtung. Dabei ist die Schaltungsanordnung so ausgestaltet, dass im Freisprechbetrieb das Programm zum Freisprechen und im Audiowiedergabe-betrieb das Programm zur Audiowiedergabe in die Signalbearbeitungseinrichtung geladen und von dieser ausgeführt wird, und wobei die Signalbearbeitungseinrichtung einen DSP zum Bearbeiten von ihm durch den zweiten elektroakustischen Wandler oder anderweitig zugeführten Audiosignalen aufweist. Diese Anordnung weist einen Hauptprozessor auf, der - obwohl er nicht selbst zur Audiosignalverarbeitung vorgesehen ist, sondern nur die Steuerung aller Funktionskomponenten übernimmt - bei einer höheren Komplexität einen Koprozessor benötigt.

Die WO99/03198 betrifft eine Verfahren zur Steuerung der Lautstärke einer Freisprecheinrichtung, bei dem ein digitaler Signalprozessor (DSP) verwendet wird, um ein das Umgebungsgeräusch repräsentierendes Signal mittels eines Verfahrens zur Geräuschreduzierung zu ermitteln. Entsprechend diesem das Umgebungsgeräusch repräsentierende Signal wird die Lautstärke der Freisprecheinrichtung angepasst.

Aufgabe der Erfindung ist es, eine Schaltungsanordnung anzugeben, die zur Audiowiedergabe und zum Freisprechen geeignet ist und die einen geringeren Aufwand erfordert.

Die Aufgabe wird gelöst durch eine Schaltungsanordnung gemäß Patentanspruch 1. Ausgestaltungen und Weiterbildungen des Erfindungsgedankens sind Gegenstand von Unteransprüchen.

Vorteil der Erfindung ist es, dass sowohl der Schaltungsaufwand sehr verringert als auch die Freisprechqualität verbessert wird, wobei eine bereits vorhandene Signalbearbeitungseinrichtung verwendet wird und diese mehr Rechenleistung besitzt als die in den Mobilfunkgeräten eingesetzten Signalverarbeitungseinrichtungen.

Erreicht wird dies im einzelnen durch eine Schaltungsanordnung zur Audiowiedergabe und zum Freisprechen in einem Kraftfahrzeug mit mindestens einem ersten elektroakustischen Wandler zum Wandeln von elektrischen Signalen in akustische Signale sowie einem zweiten elektroakustischen Wandler zum Wandeln von akustischen Signalen in elektrische Signale. Ferner ist eine mit den Wandlern gekoppelte, programmgesteuerte Signalbearbeitungseinrichtung zum Bearbeiten von ihr zugeführten Signalen vorgesehen, die dann direkt oder indirekt den bzw. die ersten elektroakustischen Wandler ansteuert. In einem Programmspeicher sind ein Programm zur Audiowiedergabe und ein Programm zum Freisprechen abgelegt, wobei bei Freisprechbetrieb das Programm zum Freisprechen und bei Audiowiedergabebetrieb das Programm zur Audiowiedergabe in die Signalbearbeitungseinrichtung geladen und von dieser ausgeführt wird.

Bei einer Weiterbildung der Erfindung weist die Signalbearbeitungseinrichtung eine Einrichtung zur automatischen geräuschabhängigen Signaloptimierung auf, die das Geräusch im Innenraum auswertet und dementsprechend zumindest die Lautstärke eines zur Übertragung vorgesehenen, der Signalbearbeitungseinrichtung zugeführten Audiosignals im Audiowiedergabebetrieb beeinflusst. Bei derartigen Einrichtungen zur automatischen geräuschabhängigen Signaloptimierung wird beispielsweise mittels eines Mikrofons das sich aus akustischem Nutzsignal und akustischem Geräuschsignal zusammensetzende akustische Abhörsignal im Fahrzeuginnenraum abgenommen und beispielsweise in diese beiden Komponenten zerlegt. Diese werden dann im Vergleich zum ursprünglichen elektrischen Audiosignal ausgewertet und daraus eine Stellgröße beispielsweise für die Lautstärke, den Kompressionsgrad und den Klang abgeleitet.

Bevorzugt wird dabei der für den Freisprechbetrieb vorgesehene zweite Wandler (beispielsweise Mikrofon) im Audiowiedergabebetrieb zur Geräuscherfassung im Innenraum verwendet. Auf diese Weise wird nur ein einziger zweiter Wandler (beispielsweise Mikrofon) benötigt, der im Freisprechbetrieb im wesentlichen zum Erfassen der Sprachsignale vom Betreiber dient und im Audiowiedergabebetrieb die Geräusche im Fahrzeuginneren erfasst. Auf diese Weise kann entweder zu den gleichen Kosten wie bisher für zwei Mikrofone ein deutlich besseres Mikrofon eingesetzt werden oder aber bei gleicher Wandlerqualität die Kosten deutlich verringert werden (beispielsweise halbiert).

Des weiteren kann mindestens ein für den Audiowiedergabebetrieb vorgesehener erster Wandler (beispielsweise Lautsprecher) auch für Freisprechbetrieb verwendet werden. Auch hier sind die Qualitätssteigerungen gegenüber den bekannten Systemen erheblich, wobei zudem die Kosten gegenüber den bisherigen Systemen reduziert sind.

Bevorzugt ist an die Audiowiedergabeeinrichtung eine mobile Fernsprecheinrichtung (fest installiert oder tragbar) angeschlossen. Die Verbindung zwischen Fernsprecheinrichtung und Signalbearbeitungseinrichtung kann dabei beispielsweise über einen MOST-Bus und/oder einen optischen Ring erfolgen. Ein MOST-Bus in Verbindung mit einem optischen Ring wird beispielsweise zum Anschluss von Audiosignalquellen an eine Signalbearbeitungseinrichtung häufig gebraucht, so dass eine entsprechende Erweiterung um eine mobile Fernsprecheinrichtung mit geringem Aufwand durchzuführen ist und darüber hinaus eine hohe Kompatibilität gewährleistet.

Insbesondere kann die Fernsprecheinrichtung ein Hörer-Abhebe-Signal (Gabelsignal) erzeugen und an die Signalübertragungseinrichtung übertragen. Bei Auftreten des Hörer-Abhebe-Signals wird das Programm zum Freisprechen.geladen und ausgeführt, während ansonsten das Programm zur Audiowiedergabe in die Signalbearbeitungseinrichtung geladen ist und von dieser ausgeführt wird.

Das Hörer-Abhebe-Signal ist ein Indikator dafür, ob gerade telefoniert wird oder telefoniert werden soll, wobei während des Telefonierens ohnehin die Musik zweckmäßiger Weise abgeschaltet ist, um eine bestmögliche Sprachübertragung zu gewährleisten. Das bedeutet, dass bei Abnahme des Hörers bzw. einer vergleichbaren Handlung (Drücken einer entsprechenden Taste) das Audiowiedergabeprogramm gestoppt wird, das Freisprechprogramm geladen und anschließend fortlaufend ausgeführt wird so lange das Hörer-Abhebe-Signal erzeugt wird, d. h. so lange telefoniert wird ("der Hörer abgehoben ist").

Wird der Hörer wieder aufgelegt bzw. eine dementsprechende Handlung vorgenommen (beispielsweise Drücken einer entsprechenden Taste), so wird das Freisprechprogramm abgebrochen, das Audiowiedergabeprogramm geladen und anschließend fortlaufend aufgeführt. Da wie bereits erwähnt, Telefonieren und beispielsweise Musik hören nicht gleichzeitig erfolgen sollen, kann die Signalbearbeitungseinrichtung optimal ausgenutzt werden, indem sie unter jeweils entsprechender Programmsteuerung in beiden Betriebsfällen aktiv ist.

Darüber hinaus kann vorgesehen werden, dass die Fernsprecheinrichtung ein Klingel-Signal erzeugt und an die Signalbearbeitungseinrichtung überträgt, wobei bei Auftreten des Klingel-Signals das Programm zur Audiowiedergabe unterbrochen wird und beispielsweise nach dem Klingeln fortgeführt wird, sofern nicht der Hörer abgehoben wird.

Schließlich wird erfindungsgemäß ein Signalprozessor innerhalb der Signalbearbeitungseinrichtung eingesetzt, da dieser ein Höchstmass an Flexibilität bietet. In dessen Programmspeicher (z. B. RAM) wird dann das jeweilige Programm aus dem Programmspeicher (beispielsweise ROM) geladen. Der erfindungsgemäß für die Audiosignalbearbeitung vorgesehene, in der Regel sehr leistungsstarke Signalprozessor steht dabei auch für den Freisprechbetrieb zur Verfügung und bietet damit eine weitaus höhere Qualität, als dies bei Verwendung der in den üblichen Mobilfunkeinrichtungen eingesetzten Signalprozessoren der Fall ist.

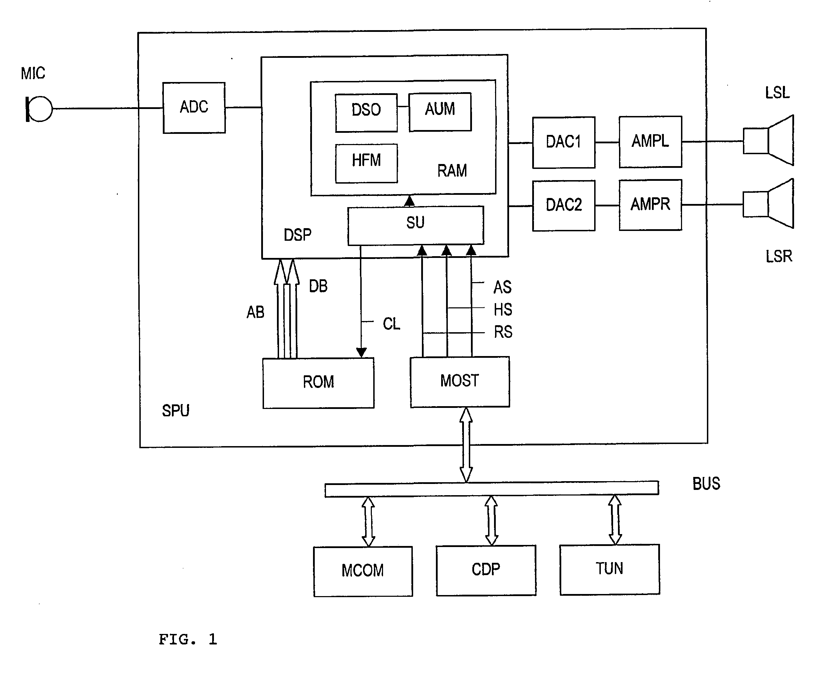

Die Erfindung wird nachfolgend anhand des in der einzigen Figur der Zeichnung dargestellten Ausführungsbeispiels näher erläutert.

Beim gezeigten Ausführungsbeispiel ist eine Signalbearbeitungseinrichtung SPU vorgesehen. An diese ist zum einen ein Mikrofon MIC als elektroakustischer Wandler zum Wandeln von akustischen Signalen in elektrische Signale angeschlossen. Des weiteren sind zwei Lautsprecher LSL, LSR (oder Gruppen von Lautsprechern) als elektroakustische Wandler zum Wandeln von elektrischen Signalen in akustische Signale mit der Signalbearbeitungseinrichtung SPU verbunden.

Die Signalbearbeitungseinrichtung SPU enthält unter anderem einen Analog-Digital-Umsetzer ADC, einen digitalen Signalprozessor DSP, zwei Digital-Analog-Umsetzer DAC1, DAC2, zwei Leistungsverstärker AMPL, AMPR, einen nichtflüchtigen Speicher ROM sowie eine Schnittstelle BUS. Dabei wird dem digitalen Signalprozessor DSP unter Zwischenschaltung des Analog Digital-Umsetzers ADC das Signal des im Kraftfahrzeuginnenraum an geeigneter Stelle angebrachten Mikrofons MIC zugeführt. Das Mikrofon ist dabei so platziert, dass es sowohl eine gute Erfassung der Innenraumgeräusche zulässt und andererseits eine zufriedenstellende Sprachaufnahme im Bereich der Fahrerposition aufweist.

Der digitale Signalprozessor DSP versorgt seinerseits unter Zwischenschaltung jeweils eines der Digital-Analog-Umsetzer DAC1, DAC2 und der Leistungsverstärker AMPL, AMPR die beiden Lautsprecher LSL und LSR.

Der digitale Signalprozessor DSP ist weiterhin mit dem nichtflüchtigen Speicher ROM über einen Adressbus und einen Datenbus AB, DB verbunden. Die Schnittstelle MOST ist schließlich über eine Steuerleitung CL mit dem nichtflüchtigen Speicher RM sowie mit dem digitalen Signalprozessor DSP über eine jeweils einzeln ausgebildete oder zu einem Bus zusammengefasste Klingelsignalleitung RS, einer Hörer-Abhebe-Signalleitung HS (Gabelsignalleitung), und mindestens einer Audiosignalleitung AS zur Übertragung von Audiosignalen gekoppelt. Die Schnittstelle MOST ist ihrerseits nach außen über eine Busleitung BUS mit einer Mobilfunkeinheit MCOM, beispielsweise einem CD-Spieler und einem Radioempfänger CUN verbunden. Als Busleitung BUS kommt beispielsweise ein optischer Ring in Frage. Die Mobilfunkeinheit MCOM, der CD-Spieler CDP und das Radioempfangsteil TUN können dabei zusammen mit der Signalbearbeitungseinrichtung SPU jeweils getrennt oder zusammen aufgebaut sein.

Der digitale Signalprozessor DSP umfasst einen flüchtigen Speicher RAM, in dem das jeweils ablaufende Programm abgelegt wird. Welches Programm in den flüchtigen Speicher RAM aus dem nichtflüchtigen Speicher ROM geladen wird, wird von einer Auswahleinheit bestimmt, die entweder im digitalen Signalprozessor DSP selbst realisiert ist oder außerhalb des digitalen Signalprozessors aufgebaut ist. Die Auswahleinrichtung SU ermittelt dabei anhand von der Schnittstelle MUST bereitgestellten Signalen, nämlich dem Hörer-Abhebe-Signal HS, welches Programm erforderlich ist, lädt dieses aus dem nichtflüchtigen Speicher ROM in den flüchtigen Speicher RAM und startet daraufhin das jeweils geladene Programm.

Beim vorliegenden Ausführungsbeispiel wird dazu entweder ein Freisprechprogramm HFM oder ein Audiowiedergabeprogramm AUN in Verbindung mit einem Programm zur dynamischen Klangoptimierung DSO eingesetzt. Die Steuerung durch die Auswahleinrichtung SU erfolgt dabei derart, dass im Normalfall das Audiowiedergabeprogramm AUM mit oder ohne das Programm zur dynamischen Klangoptimierung DSO betrieben wird. Tritt dabei das Klingelsignal RS auf, dann wird das Audiowiedergabeprogramm AUM unterbrochen und beispielsweise ein Klingelton über die Lautsprecher LSL und LSR ausgegeben. Wird nun der Hörer nicht abgenommen, dann kehrt der digitale Signalprozessor DSP nach Beendigung des Klingelns zu dem Audiowiedergabeprogramm HUM zurück.

Wird der Hörer (mit oder ohne vorausgehendem Klingelzeichen) abgenommen, dann wird das Audiowiedergabeprogramm AUM beendet, das Freisprechprogramm HFM vom nichtflüchtigen Speicher ROM in den flüchtigen Speicher RAM geladen und das Freisprechprogramm HFM gestartet. Dabei wird vorzugsweise das Mikrofon MIC, das üblicherweise zur dynamischen Klangoptimierung (DSO) eingesetzt wird, als Freisprechmikrofon verwendet. Darüber hinaus werden die beiden Lautsprecher LFL, LFR, die üblicherweise zur Audiowiedergabe dienen, als Abhörlautsprecher eingesetzt.

Als Programm zur dynamischen Klangoptimierung können beliebige die üblichen Verfahren eingesetzt werden, wie sie beispielsweise aus der US 5,434,922, US 5,615,270, GB 2 248 001, EP 0 319 777, EP 0 141 129 etc. bekannt sind. Ebenso können dem Freisprechprogramm beliebige Freisprechverfahren zugrunde liegen, wie sie beispielsweise aus der US 4,912,758, US 4,965,822, US4,982,427, 5,054,061 bekannt sind. Bei der Audiosignalwiedergabe kommen insbesondere Filterroutinen, Kompressionsroutinen und Dämpfungsroutinen etc. zum Einsatz.

## Patentansprüche

1. Schaltungsanordnung zur Audiowiedergabe und zum Freisprechen in einem Kraftfahrzeug mit
mindestens einem ersten elektroakustischen Wandler (LSL, LSR) zum Wandeln von elektrischen Signalen in akustische Signale,
einem zweiten elektroakustischen Wandler (MIC) zum Wandeln von akustischen Signalen in elektrische Signale,
einer zwischen den zweiten elektroakustischen Wandler (MIC) und den mindestens einen ersten elektroakustischen Wandler (LSL, LSR) geschalteten, programmgesteuerten Signalbearbeitungseinrichtung (SPU) zum Bearbeiten von ihr durch den zweiten elektroakustischen Wandler (MIC) oder anderweitig zugeführten Audiosignalen und
einem Programmspeicher (ROM) zum Abspeichern eines Programms (AUM) zur Audiowiedergabe und eines Programms (HFM) zum Freisprechen für die Signalbearbeitungseinrichtung (SPU),
**dadurch gekennzeichnet, dass** die Signalbearbeitungseinrichtung (SPU) einen digitalen Signalprozessor (DSP) zum Bearbeiten von der Signalbearbeitungseinrichtung (SPU) durch den zweiten elektroakustischen Wandler (MIC) oder anderweitig zugeführten Audiosignalen aufweist,
wobei die Schaltungsanordnung so ausgestaltet ist, dass bei Freisprechbetrieb das Programm (HFM) zum Freisprechen und bei Audiowiedergabebetrieb das Programm (AUM) zur Audiowiedergabe in den digitalen Signalprozessor (DSP) geladen und von dieser ausgeführt wird.

2. Schaltungsanordnung nach Anspruch 1, bei der die Signalbearbeitungseinrichtung (SPU) eine Einrichtung zur automatischen geräuschabhängigen Signaloptimierung (DSO) aufweist, die das Geräusch im Innenraum auswertet und dementsprechend zumindest die Lautstärke eines zur Übertragung vorgesehenen, der Signalbearbeitungseinrichtung (SPU) zugeführten Audiosignals im Audiowiedergabebetrieb (AUM) beeinflusst.

3. Schaltungsanordnung nach Anspruch 2, bei der der für den Freisprechbetrieb vorgesehene zweite Wandler (MIC) im Audiowiedergabebetrieb (AUM) zur Geräuscherfassung im Innenraum verwendet wird.

4. Schaltungsanordnung nach einem der vorherigen Ansprüche, bei der mindestens ein für den Audiowiedergabebetrieb vorgesehener erster Wandler (LSL, LSR) auch für Freisprechbetrieb verwendet wird.

5. Schaltungsanordnung nach einem der vorherigen Ansprüche, bei der eine mobile Fernsprecheinrichtung (MCOM) an der Signalbearbeitungseinrichtung (SPU) angeschlossen ist.

6. Schaltungsanordnung nach Anspruch 5, bei der die Fernsprecheinrichtung über einen MOST-Bus (MOST) an der Signalbearbeitungseinrichtung (SPU) angeschlossen ist.

7. Schaltungsanordnung nach Anspruch 5 oder 6, bei der die Fernsprecheinrichtung über einen optischen Ring (BUS) an der Signalbearbeitungseinrichtung (SPU) angeschlossen ist.

8. Schaltungsanordnung nach einem der Ansprüche 5,6 oder 7, bei der die Fernsprecheinrichtung ein Hörer-Abhebe-Signal erzeugt und an die Signalbearbeitungseinrichtung (SPU) überträgt und bei Auftreten des Hörer-Abhebe-Signals das Programm zum Freisprechen und ansonsten das Programm (AUM) zur Audiowiedergabe in die Signalbearbeitungseinrichtung (SPU) geladen und von dieser ausgeführt wird.

9. Schaltungsanordnung nach einem der Ansprüche 5 bis 8, bei der die Fernsprecheinrichtung ein Klingel-Signal (RS) erzeugt und an die Signalbearbeitungseinrichtung (SPU) überträgt und bei Auftreten des Klingel-Signals (RS) das Programm (AUM) zur Audiowiedergabe unterbrochen wird.

## Claims

1. A circuit for audio playback and for hands-free operation in a motor vehicle including at least one first electro-acoustic converter (LSL, LSR) for converting electrical signals into acoustic signals, a second electro-acoustic converter (MIC) for converting acoustic signals into electrical signals, a program-controlled signal processing device (SPU), which is connected between the second electro-acoustic converter (MIC) and the at least one first electro-acoustic converter (LSL, LSR), for the processing by it of audio signals supplied by the second electro-acoustic converter (MIC) or from elsewhere and a program store (ROM) for storing a program (AUM) for audio playback and a program (HFM) for hands-free operation for the signal processing device (SPU), **characterised in that** the signal processing device (SPU) includes a digital signal processor (DSP) for the processing by the signal processing device (SPU) of audio signals supplied by the second electro-acoustic converter (MIC) or from elsewhere, wherein the circuit is so arranged that in hands-free operation the program (HFM) for hands-free operation and in audio playback operation the program (AUM) for audio playback is loaded into the digital signal processor (DSP) and executed by it.

2. A circuit as claimed in Claim 1, in which the signal processing device (SPU) includes a device for automatic, noise-dependent signal optimisation (DSO), which analyses the noise in the interior and influences at least the volume of an audio signal, which is provided for transmission and is supplied to the signal processing device (SPU), accordingly in audio playback operation (AUM).

3. A circuit as claimed in Claim 2, in which the second converter (MIC) provided for the hands-free operation is used in audio playback operation (AUM) for noise detection in the interior.

4. A circuit as claimed in one of the preceding claims, in which at least one first converter (LSL, LSR) provided for audio playback operation is also used for hands-free operation.

5. A circuit as claimed in one of the preceding claims, in which a mobile telephone device (MCOM) is connected to the signal processing device (SPU).

6. A circuit as claimed in Claim 5, in which the telephone device is connected to the signal processing device (SPU) via a MOST bus (MOST).

7. A circuit as claimed in Claim 5 or 6, in which the telephone device is connected to the signal processing device (SPU) via an optical ring (BUS).

8. A circuit as claimed in one of Claims 5, 6 or 7, in which the telephone device produces a receiver-removal signal and transmits it to the signal processing device (SPU) and when the receiver-removal signal occurs the program for hands-free operation and otherwise the program (AUM) for audio playback is loaded into the signal processing device (SPU) and executed by it.

9. A circuit as claimed in one of Claims 5 to 8, in which the telephone device produces a ringing signal (RS) and transmits it to the signal processing device and when the ringing signal (RS) occurs the program (AUM) for audio playback is interrupted.

## Revendications

1. Circuit pour la lecture audio et la communication téléphonique mains libres dans un véhicule automobile, comprenant
au moins un premier convertisseur électroacoustique (LSL, LSR) pour la transformation de signaux électriques en signaux acoustiques,
un deuxième convertisseur électroacoustique (MIC) pour la transformation de signaux acoustiques en signaux électriques,
un dispositif de traitement de signal (SPU) commandé par programme et monté entre le deuxième convertisseur électroacoustique (MIC) et le ou les premiers convertisseurs électroacoustiques (LSL, LSR), pour le traitement des signaux audio qui lui sont délivrés par le deuxième convertisseur électroacoustique (MIC) ou autrement, et
une mémoire de programme (ROM) pour la mémorisation d'un programme (AUM) pour la lecture audio, et d'un programme (HFM) pour la communication téléphonique mains libres pour le dispositif de traitement de signal (SPU),
**caractérisé en ce que** le dispositif de traitement de signal (SPU) comporte un processeur de signal numérique (DSP) pour le traitement des signaux audio délivrés ou dispositif de traitement par signal (SPU) qui lui sont délivrés par le deuxième convertisseur électroacoustique (MIC) ou autrement,
le circuit étant réalisé de telle manière qu'en mode de communication téléphonique mains libres, le programme (HFM) pour la communication téléphonique mains libres, et en mode de lecture audio, le programme (AUM) pour la lecture audio sont chargés dans le processeur de signal numérique (DSP) et exécutés par celui-ci.

2. Circuit selon la revendication 1, où le dispositif de traitement de signal (SPU) comporte un dispositif pour l'optimisation automatique de signal en fonction du bruit (DSO), lequel analyse le bruit dans l'habitacle et influence en conséquence au moins le volume sonore d'un signal audio prévu pour la transmission, délivré au dispositif de traitement de signal (SPU) en mode de lecture audio (AUM).

3. Circuit selon la revendication 2, où le deuxième convertisseur (MIC) prévu pour le mode de communication téléphonique mains libres est utilisé pour la détermination de bruit dans l'habitacle en mode de lecture audio (AUM).

4. Circuit selon l'une des revendications précédentes, où le ou les premiers convertisseurs électroacoustiques (LSL, LSR) prévus pour le mode de lecture audio sont également utilisés pour le mode de communication téléphonique mains libres.

5. Circuit selon l'une des revendications précédentes, où un dispositif de téléphonie mobile (MCOM) est raccordé au dispositif de traitement de signal (SPU).

6. Circuit selon la revendication 5, où le dispositif de téléphonie est raccordé au dispositif de traitement de signal (SPU) par un bus MOST (MOST).

7. Circuit selon la revendication 5 ou la revendication 6, où le dispositif de téléphonie est raccordé au dispositif de traitement de signal (SPU) par un anneau optique (BUS).

8. Circuit selon l'une des revendications 5, 6 ou 7, où le dispositif de téléphonie génère un signal de prise d'écouteur et délivre celui-ci au dispositif de traitement de signal (SPU), et où, à l'entrée du signal de prise d'écouteur, le programme pour la communication téléphonique mains libres, et sinon le programme (AUM) pour la lecture audio sont chargés dans le dispositif de traitement de signal (SPU) et exécutés par celui-ci.

9. Circuit selon l'une des revendications 5 à 8, où le dispositif de téléphonie génère un signal de sonnerie (RS) et délivre celui-ci au dispositif de traitement de signal (SPU), et où, à l'entrée du signal de sonnerie (RS), le programme pour la lecture audio (AUM) est interrompu.
